# NEW EUROPEAN PATENT SPECIFICATION

(11) **EP 1 625 174 B2**
(45) Date of publication and mention of the opposition decision: **14.07.2010**
(45) Mention of the grant of the patent: 07.02.2007
(21) Application number: 04733354.7
(22) Date of filing: 17.05.2004
(51) Int. Cl.: C08J 9/00, C08J 9/14

(54) **HIGH TEMPERATURE RESISTANT, FLEXIBLE, LOW DENSITY POLYPROPYLENE FOAMS**
HOCHTEMPERATURBESTÄNDIGE POLYPROPYLENWEICHSCHÄUME NIEDRIGER DICHTE
MOUSSES SOUPLES A BASE DE POLYPROPYLENE, AYANT UNE FAIBLE DENSITE ET RESISTANT AUX TEMPERATURES ELEVEES

(30) Priority: 22.05.2003 EP 03101486
(43) Date of publication of application: 15.02.2006
(73) Proprietor: NMC S.A., 4731 Raeren/Eynatten (BE)
(72) Inventor: JOB, Denis, B-4031 Angleur (BE)
(74) Representative: Office Freylinger
(86) International application number: PCT/EP2004/050828
(87) International publication number: WO 2004/104075

(56) References cited:
- EP-A- 0 588 321
- EP-B- 0 291 764
- WO-A-01/94092
- DE-C- 19 536 563
- US-A- 4 694 026
- US-A- 5 180 751
- US-A- 6 417 240
- NORBERT REICHELT, MANFRED STADLBAUER, RICK FOLLAND, CHUL B.PARK AND JIN WANG: 'PP-Blends with Tailored Foamability and Mechanical Properties', 19 May 2003 article 'Blowing Agents and Foaming Processes', pages 1 - 8

## Description

The present invention relates to a method for producing polypropylene foams with higher temperature resistance, better flexibility and with an improved dimensional stability.

Polypropylene is the most versatile commodity plastic, remaining the fastest growing major polymer. It is used in various industries for its wide range of mechanical, thermal and optical properties. Due to the numerous processes and catalysts available to synthesize polypropylene and its copolymers, this 'polymer family' offers some decisive advantages over other resins, among which one can highlight:
- commodity thermoplastic;
- ease of processability;
- high temperature resistance;
- high rigidity;
- low density (900 to 917 kg/m³, depending on comonomer content);
- extended range of flow properties;
- hydrolytical stability;
- recyclability.

Foams can benefit from the properties of the polypropylenes. Higher temperature resistance, higher rigidity for a given density of the foam, can be obtained as compared to a conventional foamable low melting point polyolefins such as low-density polyethylene.

A typical direct gassing foaming process proceeds as follows: polymers and optional additives are fed in the entrance zone of the cylinder of an extruder, having single or double screws (co- or counter-rotatives). The components are molten in the cylinder, then gas is injected at a certain point of the cylinder, the whole mixture is homogeneously cooled down, and finally flows through a die in which foaming begins due to pressure drop, causing insolubility of the gas in the melt and bubble formation. During the free expansion of the polypropylene foam to the outside atmosphere, cells are growing and the cell walls are highly stretched. They remain in a partially molten state for a while, and the viscosity build up at that moment is crucial for the cell stability and the integrity of the finished foam

The linear structure of most of the polypropylene types is leading to poor cell integrity, open cells structure and a lack of foamability. This is partly due to the non-branched structure causing the molecular chains to easily slipping over each other, without any other constraint than chain-to-chain friction. Moreover, the gap between melting point and crystallization point is wide (crystallization temperature often leads at ± 100°C for non-nucleated PP, while melting point can be from 140°C to 170°C). As during the foaming, the inner center of the foam remains hotter than the exterior because of the inherent thermal insulating properties of cellular materials, cells at the middle of the foams are opening easily. Mechanical properties of the resulting foams are poor.

In the particular case of direct gassing foaming processes, if a foam density as low as 15 to 20 kg/m³ is desired, having a majority of closed cells, it is necessary to use a special kind of polypropylene, the so-called « High Melt-strength » (referred to hereafter as « HMS PP») grades. These grades possess long-chain branched structure, which leads to entanglements of the molecular chains. In the molten state, if such HMS PP are stretched, the disentanglement step of the molecular chains leads to an increase of the shear & elongational viscosity, which is favorable to maintain cell wall integrity during expansion in the still molten state. Furthermore, branches are believed to induce crystal nucleation, so that the temperature gap between melting point and crystallization point is reduced: the crystallization temperature rises to 120-125°C while the melting point is unaffected. This is definitely promoting closed-cells structure of the foam.

BASELL Pro-Fax PF 814, BOREALIS DAPLOY 130D have both the aforementioned long-chain branching structure, introduced by a post-reactor step, either by irradiation (BASELL) or by reactive extrusion (BOREALIS), and are up to now the main materials successfully used to produce very low density foams.

The foams obtained by using HMS PP can have a very low density, provided a maximum of HMS PP is used. The counterpart polymer may be another conventional linear polypropylene homopolymer or copolymer, having a melting point range from 140°C to 170°C, as measured by Differential Scanning Calorimetry (DSC). Foams made from polypropylene are reported in the prior art to be more rigid than LDPE foams for example, influenced by the higher E-modulus of conventional homopolymer or copolymer (random or bloc) polypropylenes compared to LDPE.

International patent application WO 01/94092 [THERMAFLEX INTERNATIONAL HOLDING] discloses a process for producing a polyolefin foam having higher temperature resistance and comprising a polypropylene and/or polyethylene. The process comprises first mixing and melting one or more polyolefins having a melting range, measured by means of differential scanning calorimetry at a heating rate of 10°C/min, within the range of 95°C to 170°C, with optionally other polyolefins and/or additives, so as to form a homogeneous mixture having a melt temperature within the range of 120 to 160°C, melting said homogeneous mixture in an extruder, mixing said molten mixture with a physical foaming agent and cooling it to produce a foam at atmosphere. The polyolefins having a melting range from 95 to 170°C are constituted from polypropylene having melting temperature range within 140 to 170°C, and PROFAX 814 HMS-PP from BASELL is cited as representative of the polypropylene used. The other polyolefin can be a polyethylene having a melting range from 95 to 135°C, for example low density polyethylene, high density polyethylene, or EVA.

Further in this patent application, it is pointed out that foams having a high polypropylene content have the best temperature resistance BUT are somewhat less flexible than the foams having a lower polypropylene content. The flexibility of foams containing from 40 to 95% by weight of polypropylene having a melting range within the range of 140 to 170°C are said to have in general a flexibility of 0.10 N/mm² at 20% impression, measured according to DIN 53577, while the foams containing from 0 to 40% by weight of polypropylene having a melting range within the range of 140 to 170°C in general have a flexibility of 0.060 N/mm² at 20% impression, measured according to DIN 53577.

Finally, WO 01/94092 teaches the advantage of compounding the polymers and additives prior to the extrusion of the foam, so that one single DSC melting peak is obtained.

However, there are end uses that require both higher temperature resistance and improved flexibility.

The present invention addresses the request for foams having improved flexibility while possessing a high thermal resistance, higher than existing flexible foams made, for example, from LDPE, or the aforementioned combination of polypropylene and polyethylene disclosed in WO 01/94092. The foams produced according to the present invention comprise from about 5 to about 95 weight percent of a High Melt Strength polypropylene. The remaining 95 to 5 weight percent will comprise from 95 to 5 weight percent of a polypropylene modified with ethylene/C3-C12 alpha-olefin copolymers, where the weight ration between polypropylene and the ethylene/C3-C12 alpha-olefin copolymer is between 90/10 and 30/70. These materials are commercially available with the tradenames Moplen or TPO HIFAX (Basell), FINAPRO (Fina) and the like. These products, having a flexural modulus equal or inferior to 200 MPa and a melting point between 140°C and 170°C, may eventually be complemented by a polypropylene resin having a melting point between 140°C and 170°C, like a polypropylene homopolymer AND/OR a polypropylene bloc (heterophasic) copolymer AND/OR a polypropylene random copolymer.

Surprisingly, when associating HMS PP with such flexible polypropylene copolymers, the mechanical properties of the resulting foams are greatly improved. The resulting foam is much more flexible than PP foams, while the melting temperature is still much higher than for LDPE foams and higher than the prior art combination of polypropylenes with polyethylenes.

An advantage of the foams produced according to the invention is that the dimensional stability problem arising during extrusion of such flexible polypropylene foams is solved.

HIFAX resins which are manufactured under CATALLOY BASELL proprietary synthesis may be used in the present invention. They are elastomeric thermoplastic olefins, bloc copolymers of polypropylene, with a peculiarly high rubber content. In the following table, key properties are listed in order to compare conventional polypropylene types with some of the HIFAX grades used in the frame of the present invention; these resins will be identified as « TPO PP »:

| **Producer** | **Grade** | **Type** | **MFI 230°C/2.16k g (g/10min.)** *ISO 1133* | **Flexural Modulus (MPa)** *ISO 178* | **Tensile Modulus (MPa)** *ISO 527-2* | **Melting point (°C)** *ISO 3146* |
|---|---|---|---|---|---|---|
| BASELL | PROFAX PF-814 | HMS PP | 3 | 1700 | | 163°C |
| BASELL | MOPLEN HP500N | HPP | 12 | 1550 | | 165°C |
| DSM | STAMYLAN P 11E10 | HPP | 0.3 | 1500 | | 165°C |
| BASELL | HOSTALEN PP H 1022 | Bloccopo PP | 0.3 | | 1100 | 165 °C |
| DSM | STAMYLAN P RA1E10 | Random copo PP | 0.3 | 800 | | 143.5°C |
| BASELL | HIFAX CA 60 A | TPO PP | 14 | 80 | | 142°C |
| BASELL | HIFAX 7320 | TPO PP | 2.5 | 200 | | 162°C |
| BASELL | HIFAX CA 020 | TPO PP | 0.6 | 20 | | 141°C |

For comparison, here is the same set of property for a low-density polyethylene :

| **Producer** | **Grade** | **Type** | **MFI 230°C/2.16k g (g/10min.) *ISO 1133*** | **Density Kg/m³** | **Tensile Modulus (MPa) *ISO 527-2*** | **Melting point (°C) *ISO 3146*** |
|---|---|---|---|---|---|---|
| DSM | STAMYLAN LD 2601TX17 | LDPE | 0.65 | 926 | 320 | 113°C |
| BASELL | LUPOLEN 1800 H | LDPE | 1.6 | 919 | 200 | 108°C |

One clearly sees that the cited HIFAX grades potentially combine an exceptional flexibility with a high melting point, more comparable to those of the conventional polypropylene homo and copolymers.

It is however necessary to combine the HIFAX TPO with HMS PP in order to reach low density foams. HIFAX by themselves are not foaming well at all, a minimum of 5 % HMS PP (PROFAX PF-814 from BASELL for example) is therefore necessary to help foaming of the composition of the present invention.

Optionally, one can add to the above composition ethylenic polymers having a melting point from 95°C to 135°C, such as a high pressure copolymer of ethylene (for example: ethylene ethyl acrylate [EEA], ethylene acrylic acid (EAA), ethylene methacrylic acid [EMAA], ethylene vinyl acetate [EVA], ethylene butyl acrylate [EBA]) AND/OR a low density polyethylene AND/OR a medium density polyethylene AND/OR a high density polyethylene, provided the required combination of flexibility and temperature resistance of the foamed blend is achieved.

Gas for foaming are chosen among following products: short chain alkanes from C2 to C8, CO₂, HFC (134, 134a, 152a) and their blends. Preferred blowing agent for making very low density are butane and propane and mixtures thereof, especially recommended is the use of isobutane.

All kind of additives known to the skilled man in the art can be used to improve processability and properties of the foams of the present invention: flame retardant, antistatics, processing aids, nucleating agents, pigments, infrared reflector/absorber, anti-UV agents, antioxidants, etc.

The dimensional stability of polypropylene foams is governed by the relative permeation of the foaming gas compared to the outside air through the polymer membrane of each cell wall. It is also known that physical blowing agents having a molar volume somewhat bigger than atmospheric gases (nitrogen, oxygen and CO₂), permeate at a different rate than air components through polypropylene. This is the case for HCFC 142b, which permeates at one fifth of the rate of air in a PP resin. For an approximately sterically similar molecule, isobutane, it is verified in practice to permeate also more slowly than air in polypropylene: foam is blowing further after the day of extrusion. This phenomenon induces a variation in the dimensions and density, which is more or less acceptable.

Despite the use of permeability modifiers known in the art, like GMS or a saturated fatty acid derivative (stearamide for example) commonly used for volume stabilization of LDPE foams, a collapse of the foam occurs after some meter on the cooling line. Despite that the next day the foam has blown back to a lower density, the foam has nevertheless a bad aspect surface.

Surprisingly, it has been discovered that by adding a permeability modifier selected from stearamide or glycerol monostearate to the composition of the present invention, and by applying a rapid cooling on the foam surface immediately after the die exit, the collapse during extrusion is unexpectedly reduced and in the days afterwards the surface aspect is improved. Cooling is made by air blowing ring having the external shape of the foam profile to be made in order to maintain an equal cooling efficiency over the entire external surface of the foam. Care must be taken to avoid a cooling of the die, which would freeze the foam. An insulating Teflon plate with a small aperture can be used, for example, placed against the die, letting the foam expand after passing through the aperture in the Teflon plate.

In the case of a hollow foam body, the above described principle of rapid cooling with air may advantageously be applied to the inside of the tube, to bring an additional improvement of the foam stability. This can be done by using a hollow bolt, which can be connected to an accurately controlled compressed air delivery device. Air is blown through the bolt, and cools the internal surface of the foam body. This double sided cooling results in a much better stability of the foam tube, by bringing very fast rigidity to the hollow foam structure. Air must be carefully and accurately dosed, otherwise a freezing of the foam at long term would occur, or dimension variations with time can occur.

A direct gassing extrusion process is used for making the foams of the present invention. The process comprises the following steps
- feeding the polymers and optional additives into an extruder and heating the blend in the cylinder of the extruder so as to melt and blend the polymers and the optional additives;
- injecting a blowing agent which is liquid under injection pressure but gaseous at ambient conditions, mixing of the gas and molten polymers and the optional additives in the last part of the cylinder;
- cooling and further homogenizing through a heat exchanger section, followed by a static mixer element;
- extruding the cooled mixture through a die, the mixture is expanding by evaporation of the dissolved gas due to pressure drop and insolubility limit, so as to form a foam;
- rapidly cooling the foam surface immediately after the die exit using active cooling;
- further cooling the foam to the atmosphere conditions and while drawing the foam slightly,
wherein the step of rapidly cooling the foam surface immediately after the die exit using active cooling is performed by :
O cooling the foam immediately after the die by locally blowing air onto external surface of a full foam body, by use of an air ring around the foam, and for a hollow foam additionally use a hollow bolt in the tooling, through which bolt is blown air carefully metered and controlled so as to cool immediately the internal surface of the hollow foam.

Another advantage brought by the use of these HIFAX with high rubber content and low E-modulus, is the improvement of impact at low temperature. Foams in some automotive use have to maintain their flexibility event at deep freeze temperature such as -40°C. Without the use of impact modifier, it is impossible to avoid break of the foam. The combination of high melt strength polypropylene and CATALLOY rubber modified polypropylene allows to pass this test, without affecting the upper side of temperature resistance of the foams.

Applications for such new foams are numerous. Their combined high flexibility and high temperature resistance allows to outperform flexible LDPE foams where higher service temperature are requested, in thermal insulation of pressurized steam water for example. Automotive industry is very pleased to replace non-thermoplastics parts, like PUR, or PVC components; lightweight, recyclable, higher temperature resistance and flexible new PP foams of the present invention are adequate candidates. Furthermore, « All PP car» is a wish in automotive industry, and the percentage of PP in automotive plastic parts is more and more increasing. Any shape can be made with the new formulation: tube, rectangles, hollow shapes, sheets, irregular convex or concave shapes ... in any thickness, density and cell size according to the final use request.

Care must be taken about the long-term stability of polypropylene, especially if in contact with metal, peculiarly copper. Antioxidant packages, including metal deactivator, are available and can help to satisfy the automotive standards. Maximum temperature for long-term exposure must be determined carefully, in the most severe condition. Peak temperatures have also to be tested. It is however clear that the new polypropylene foams of the present invention can withstand a higher long-term service temperature than LDPE foams.

Finally, the « flexibility» of the resulting new foams, measured for example by compression stress at 20% deformation according to DIN53577, is superior to prior art foams like those described in WO 01/94092, that is, a lower value of the force is required to compress foam of 20% (remains 80% of initial height). Dimensional stability during extrusion is improved.

### Comparative example 1, not representing the present invention

A foam is prepared by introducing in a twin screw co-rotative extruder a blend made from 40 weight parts of HMS polypropylene PROFAX PF-814 (BASELL) and 60 weight parts of a random copolymer STAMYLAN P RA1E10 (DSM, flexural Modulus = 800 MPa), adding 5 weight parts of a PP based masterbatch containing 40% wt talcum, 1 weight part of glycerol monostearate ATMER 129, 5 parts of a PE based 5% fluoroelastomer masterbatch and 6 parts of a 25% antioxidant PP based masterbatch. The mixture is extruded at 20 kg/h, using 1,86 kg isobutane per hour as blowing agent. The melt is cooled through a heat exchanger section, then passes a static mixer and finally is extruded through a rectangular shape die. Melt temperature before the die is 153.7°C. No air is blown on the foam surface. The resulting foams expands to the atmosphere, has a fresh density of 30.5 kg/m³, with 870 cells/cm². It seems rather stable in dimensions in the cooling bath. Size of the rectangular foam is 26 x 17.5mm. Foam is moderately flexible, compression at 20% deformation (DIN 53577) in the direction of extrusion is 0.063 N/mm². Next day, density has fallen to 26 kg/m³.

### Comparative example 2. not representative of the invention

A foam is prepared by introducing in a twin screw co-rotative extruder a blend made from 60 weight parts of HMS polypropylene PROFAX PF-814 (BASELL) and 40 weight parts of TPO PP HIFAX CA020 (BASELL), adding 0.5 weight parts of a PP based masterbatch containing 60% wt talcum, 5 weight parts of an EVA based masterbatch containing 90wt% stearamide ARMID HT (AKZO NOBEL). The mixture is extruded at 15 kg/h, using 1,5 kg isobutane per hour as blowing agent. The melt is cooled through a heat exchanger section, then passes a static mixer and finally is extruded through a rectangular shape die. Melt temperature before the die is 147.4°C. No air is blown on the foam surface. The resulting foams expand to the atmosphere, the flexibility is very attractive but foam begins to collapse in the cooling some meters after the die. Density at the end of the cooling bath is 30.2 kg/m³, foam is 30mmx20mm. After 1 day, density is 36 kg/m³ and surface is wrinkled. After 1 month, density is 27 kg/m³ but surface aspect is bad.

### Example 3, representative of the invention

The composition and extrusion parameter of example 3 are taken, except that an air ring is placed around the foam right after the die. A Teflon plate with adequate aperture avoids that air blows on the die itself, which would cause a freezing in the die. Foam now is almost not collapsing in the cooling bath. Fresh density after cooling bath is 30.2 kg/m³. After 1 day, density is 31.2 kg/m³ and surface OK. After 1 month, density has fallen to 27 kg/m³, but surface aspect is much better than in comparative example 3.

### Example 4. representative of the invention

To make a small protection insulative tubular foam, a complex blend is fed through the same extruder as in Example 1 :
- 60 parts of HMS PP PROFAX 814 (BASELL) ;
- 40 parts of TPO PP HIFAX CA 60 A (BASELL);
- 6 parts of a 25% antioxidant PP based masterbatch ;
- 4 parts of a 80% halogenated flame retardant + antimony trioxide combination PP based masterbatch ;
- 1.5 parts of an EVA based masterbatch containing 90% of a 60/30 stearamide/palmitamide blend;
- 1 part of a PP based 40% talcum masterbatch;
- 5 parts of a PE based 5% fluoroelastomer masterbatch.

The mixture is extruded at 12 kg/h, using 1,56 kg isobutane per hour as blowing agent. The melt is cooled through a heat exchanger section, then passes a static mixer and finally is extruded through a round shape die having 2.4 mm diameter, the tool having also a bolt of 1.2 mm. Melt temperature before the die is 150.1°C. Air ring with a Teflon plate having adequate aperture to let the foam pass is placed just at the die around the tubular foam. The resulting foams expands to the atmosphere, has a fresh density of 34 kg/m³, with 400 to 450 cells/cm². There is no major sign of collapse in the cooling bath. Outer diameter is 15mm, internal diameter is 7mm. The resulting foam is very flexible. Single peak melting point DSC is 156.58°C. On the next day density is 31.5 kg/m³, the surface aspect is excellent.

### Example 5. representative of the invention:

A foam tube was made using the same composition as in example 4, with an air ring just after the die to blow air on the external surface of the foam, but a hollow bolt (hollow needle) was used inside the die instead of a full one. Air was accurately metered through the bolt, in order to maintain a time stable and within tolerance outside diameter of the foam tube. The quality of the internal surface was improved, and volume stability of the foam was even better due to the double sided cooling. One further noticed a much better rotundity of the foam tube at the end of the downstream. When foam tube was wound on a cardboard or metal nave, the good rotundity helped to provide an air cushionning effect, which decreased tensile & compression stresses of each foam spire, and therefore enhanced the quality & appearance of the tube when unwound after some weeks.

## Claims

1. Method for producing a high temperature resistant, high flexibility and low density extruded foam comprising:
• from about 5 to about 95 weight percent of a High Melt strength polypropylene,
• from about 95 to about 5 weight percent of a polypropylene modified with ethylene/C3-C12 alpha-olefin copolymers, where the weight ratio between polypropylene and the ethylene/C3-C12 alpha-olefin copolymer is between 90/10 and 30/70 and
• a permeability modifier selected from the group consisting of stearamide and glycerol monostearate
comprising the steps of :
• feeding the polymers and optional additives into an extruder and hating the blend in the cylinder of the extruder so as to melt and blend the polymers and the optional additives:
• injecting a blowing agent which is liquid under injection pressure but gaseous at ambient conditions, mixing of the gas and molten polymers and the optional additives in the last part of the cylinder ;
• cooling and further homogenizing through a heat exchanger section, followed by a static mixer element;
• extruding the cooled mixture through a die, the mixtures is expanding by evaporation of the dissolved gas due to pressure drop and insolubility limit, so as to form a foam;
• rapidly cooling the foam surface immediately after the die exit using active cooling,
• further cooling the foam to the atmosphere conditions and while drawing the foam slightly,
wherein the step of rapidly cooling the foam surface immediately after the die exit using active cooling is performed by :
cooling the foam immediately after the die by locally blowing air onto external surface of a full foam body, by use of an air ring around the foam, and for a hollow foam additionally use a hollow bolt in the tooling, through which bolt is blown air carefully metered and controlled so as to cool immediately the internal surface of the hollow foam.

2. The method according to claim 1, wherein the modified polypropylene has a flexural modulus equal or inferior to 200 MPa and a melting point between 140°C and 170°C.

3. The method according to claim 1 or 2 wherein the foam further comprises a polypropylene resin having a melting point between 140°C and 170°C.

4. The method according to claim 3 wherein the polypropylene resin having a melting point between 140°C and 170°C is chosen among the group consisting of polypropylene homopolymer, polypropylene bloc (heterophasic) copolymer, polypropylene random copolymer and mixtures thereof.

5. The method according to claim 1 to 3 wherein the foam further comprises at least one ethylenic polymer having a melting point from 95°C to 135°C.

6. The method according to claim 5, wherein at least one ethylenic polymers having a melting point from 95°C to 135°C is chosen among the group consisting of ethylene ethyl acrylate [EEA], ethylene acrylic acid (EAA), ethylene methacrylic acid [EMAA], ethylene vinyl acetate [EVA], ethylene butyl acrylate [EBA]), low density polyethylene, medium density polyethylene, high density polyethylene and mixtures thereof.

## Patentansprüche

1. Verfahren zur Herstellung eines hochtemperaturbeständigen, extrudierten Schaums mit hoher Flexibilität und niedriger Dichte, der Folgendes umfasst:
• ungefähr 5 bis ungefähr 95 Gewichtsprozent eines hochschmelzefesten Polypropylens,
• ungefähr 95 bis ungefähr 5 Gewichtsprozent eines mit Ethylen/C3-C12-Alpha-Olefin-Copolymer modifizierten Polypropylens, wobei das Gewichtsverhältnis zwischen Polypropylen und dem Ethylen/C3-C12-Alpha-Olefin-Copolymer zwischen 90/10 und 30/70 beträgt, und
• einen Permeabilitätsmodifikator, der aus der Gruppe bestehend aus Stearamid und Glycerolmonostearat ausgewählt wird,
umfassend folgende Schritte:
• Zuführen der Polymere und optionalen Additive in einen Extruder und Erwärmen des Gemischs im Zylinder des Extruders, um so die Polymere und die optionalen Additive zu schmelzen und zu mischen;
• Einspritzen eines Treibmittels, das unter Einspritzdruck flüssig, unter Umgebungsbedingungen aber gasförmig ist, und Mischen des Gases, der geschmolzenen Polymere und der optionalen Additive im letzten Teil des Zylinders;
• Kühlen und weiteres Homogenisieren durch einen Wärmetauscherabschnitt und anschließend durch ein statisches Mischerelement;
• Extrudieren des gekühlten Gemischs durch eine Düse, wobei sich das Gemisch durch Verdampfen des gelösten Gases wegen Druckabfall und Unlöslichkeitsgrenze ausdehnt, um so einen Schaum zu bilden;
• schnelles Kühlen der Schaumoberfläche unmittelbar nach Austritt aus der Düse unter Verwendung aktiver Kühlung;
• weiteres Kühlen des Schaums bis auf Atmosphärenbedingungen bei gleichzeitigem leichtem Ziehen des Schaums,
wobei der Schritt des schnellen Kühlens der Schaumoberfläche unmittelbar nach Austritt aus der Düse unter Verwendung aktiver Kühlung folgendermaßen durchgeführt wird
Kühlen des Schaums unmittelbar nach der Düse durch örtliches Blasen von Luft auf die Außenfläche eines vollen Schaumkörpers unter Verwendung eines Luftrings um den Schaum herum, und bei hohlem Schaum zusätzlich Verwendung eines hohlen Bolzens in den Werkzeugen, wobei behutsam dosierte und geregelte Luft durch den Bolzen geblasen wird, um so die Innenfläche des hohlen Schaums unmittelbar zu kühlen

2. Verfahren nach Anspruch 1, wobei das modifizierte Polypropylen einen Biegemodul gleich oder unter 200 MPa und einen Schmelzpunkt zwischen 140°C und 170°C aufweist

3. Verfahren nach Anspruch 1 oder 2, wobei der Schaum ferner ein Polypropylenharz mit einem Schmelzpunkt zwischen 140°C und 170°C umfasst.

4. Verfahren nach Anspruch 3, wobei das Polypropylenharz, das einen Schmelzpunkt zwischen 140°C und 170°C aufweist, aus der Gruppe bestehend aus Polypropylen-Homopolymer, Polypropylen-Blockcopolymer (heterophasisches Copolymer), Polypropylen-Random-Copolymer und Gemischen davon ausgewählt wird

5. Verfahren nach Anspruch 1 bis 3, wobei der Schaum ferner mindestens ein Ethylenpolymer mit einem Schmelzpunkt von 95°C bis 135°C umfasst

6. Verfahren nach Anspruch 5, wobei mindestens ein Ethylenpolymer, das einen Schmelzpunkt von 95°C bis 135°C aufweist, aus der Gruppe bestehend aus Ethylen-Ethylacrylat (EEA), Ethylen-Acrylsäure (EAA), Ethylen-Methacrylsäure (EMAA), Ethylen-Vinylacetat (EVA), Ethylen-Butylacrylat (EBA), Polyethylen niedriger Dichte, Polyethylen mittlerer Dichte, Polyethylen hoher Dichte und Gemischen davon ausgewählt wird

## Revendications

1. Procédé de production d'une mousse extrudée résistant à des températures élevées, de flexibilité élevée et de faible densité, comprenant:
• du polypropylène possédant une résistance élevée à l'état fondu, à concurrence d'environ 5 à environ 95 % en poids,
• un polypropylène modifié avec des copolymères d'éthylène/alpha-oléfine en C₃-C₁₂, à concurrence d'environ 95 à environ 5 % en poids, le rapport pondéral entre le polypropylène et le copolymère d'éthylène/alpha-oléfine en C₃-C₁₂ s'élevant entre 90/10 et 30/70 et
• un modificateur de la perméabilité choisi parmi le groupe constitué par le stéaramide et le monostéarate de glycérol
comprenant les étapes :
• d'introduction des polymères et des additifs optionnels dans une extrudeuse et chauffer le mélange dans le cylindre de l'extrudeuse de façon à obtenir une mise en fusion et un mélange des polymères et des additifs optionnels ;
• d'injection d'un agent moussant qui est liquide sous la pression d'injection, mais gazeux aux conditions ambiantes, de mélange du gaz et des polymères et les additifs optionnels en fusion dans la dernière partie du cylindre ;
• de refroidissement et d'homogénéisation supplémentaire à travers une section d'échange de chaleur, suivie d'un élément de mélangeur statique ;
• d'extrusion du mélange refroidi à travers une filière, le mélange étant soumis à une expansion par évaporation du gaz dissous du fait de la chute de pression et de la limite d'insolubilité, de façon à obtenir une mousse ;
• de refroidissement rapide de la surface de la mousse directement après la sortie de la filière en utilisant un refroidissement actif ;
• de refroidissement supplémentaire de la mousse jusqu'aux conditions atmosphériques, tout en procédant à un léger étirage de la mousse,
l'étape de refroidissement rapide de la surface de la mousse directement après la sortie de la filière en utilisant un refroidissement actif est mise en oeuvre :
en refroidissant la mousse directement après la filière par insufflation locale d'air sur la surface externe d'un corps de mousse plein, en utilisant un anneau pneumatique autour de la mousse et, pour une mousse creuse, en utilisant en outre un boulon creux dans l'outillage, de l'air soigneusement dosé et contrôlé étant insufflé à travers ledit boulon, de façon à refroidir directement la surface interne de la mousse creuse

2. Procédé selon la revendication 1, dans lequel le polypropylène modifié possède un module de flexion égal ou inférieur à 200 MPa et un point de fusion entre 140 °C et 170 °C

3. Procédé selon la revendication 1 ou 2, dans lequel la mousse comprend en outre une résine de polypropylène possédant un point de fusion entre 140 °C et 170 °C

4. Procédé selon la revendication 3, dans lequel la résine de polypropylène possédant un point de fusion entre 140 °C et 170 °C est choisie parmi le groupe constitué par un homopolymère de polypropylène, un copolymère séquencé (hétérophasique) de polypropylène, un copolymère statistique de polypropylène, ainsi que leurs mélanges

5. Procédé selon les revendications 1 à 3, dans lequel la mousse comprend en outre au moins un polymère éthylénique possédant un point de fusion de 95°C à 135°C

6. Procédé selon la revendication 5, dans lequel au moins un polymère éthylénique possédant un point de fusion de 95 °C à 135 °C est choisi parmi le groupe constitué par un copolymère d'éthylène/acrylate d'éthyle [EEA], un copolymère d'éthylène/acide acrylique (EAA), un copolymère d'éthylène/acide méthacrylique [EMAA], un copolymère d'éthylène/acétate de vinyle [EVA], un copolymère d'éthylène/acrylate de butyle [EBA], du polyéthylène basse densité, du polyéthylène moyenne densité, du polyéthylène haute densité, ainsi que leurs mélanges
